# EUROPEAN PATENT APPLICATION

(11) **EP 4 851 319 A1**
(43) Date of publication of application: **09.12.2026**
(21) Application number: 25748165.5
(22) Date of filing: 28.01.2025
(51) Int. Cl.: C22C 9/00, B01D 53/22, B01D 69/00, B01D 69/02, B01D 71/02, C01B 3/56, C22C 5/04, C22F 1/00, C22F 1/08, C22F 1/14

(54) **HYDROGEN-PERMEABLE MEMBRANE COMPOSED OF PDCU-BASED ALLOY**

(30) Priority: 30.01.2024 JP 2024011556
(71) Applicant: Tanaka Precious Metal Technologies Co., Ltd., Tokyo 103-0025 (JP)
(72) Inventor: OGAWA, Kohei, Isehara-shi, Kanagawa 259-1146 (JP); HORIKAWA, Daisuke, Isehara-shi, Kanagawa 259-1146 (JP); KUBOTA, Shuichi, Isehara-shi, Kanagawa 259-1146 (JP)
(74) Representative: Weickmann & Weickmann PartmbB
(86) International application number: PCT/JP2025/002498
(87) International publication number: WO 2025/164583

(57) **Abstract**

The present invention relates to a hydrogen permeable membrane composed of a PdCu-based alloy. The PdCu-based alloy of the present invention includes 47.0 at% or more and 49.0 at% or less of Pd, and 0.01 at% or more and 0.75 at% or less of Ag, with the balance being Cu and unavoidable impurities. In the hydrogen permeable membrane of the present invention, the ratio of a hydrogen permeability coefficient at 100°C, φ¹⁰⁰, to one at 300°C, φ³⁰⁰, (φ¹⁰⁰/φ³⁰⁰), is 0.4 or more, and therefore a decrease in the hydrogen permeability coefficient in a low-temperature region is suppressed. The hydrogen permeable membrane of the present invention has an improved hydrogen permeability in a low-temperature region of 150°C or less.

## Description

### FIELD OF THE INVENTION

The present invention relates to a hydrogen permeable membrane that selectively permeates hydrogen from a hydrogen-containing gas, particularly to a hydrogen permeable membrane with better hydrogen permeability in a low-temperature region than those of conventional art.

### DESCRIPTION OF THE RELATED ART

Hydrogen is widely utilized in various fields, such as a hydrogen source and a reducing agent in synthesis processes of various compounds. Recently, hydrogen has been drawing attention as a renewable energy and is anticipated to be used in fuel cells and fuel gases for hydrogen engines as the power source of automobiles and heavy machinery. In addition, hydrogen is gaining attention in the field of advanced medicine, and for example, its effectiveness in hydrogen inhalation therapy for post-cardiac arrest syndrome has been reported.

A hydrogen permeable membrane is a material that is used in a hydrogen handling device utilized in various fields described above. For example, hydrogen utilization in the fuel field requires a high-purity hydrogen gas, and accordingly a hydrogen purification system using a hydrogen permeable membrane has been developed. Also, a hydrogen sensor is required for measuring a hydrogen concentration in the power source and exhaust gas in a fuel cell vehicle and the like. A hydrogen sensor is also required for measuring a correct and precise hydrogen concentration in a medical gas in the medical field. A hydrogen permeable membrane that allows hydrogen to selectively permeate from the measurement target gas can be utilized suitably in the hydrogen sensor for these purposes.

A hydrogen permeable membrane is composed of a metal alloy that can desorb the selectively absorbed hydrogen while diffusing it inside. As such a metal alloy membrane, particularly, Pd (palladium) alloy membranes (PdAg-based and PdCu-based alloys and the like) utilizing the selective hydrogen permeability of Pd are known. Particularly, a hydrogen permeable membrane composed of a PdCu-based alloy has been put into practical use and mass produced due to high resistance to hydrogen embrittlement and corrosion (Patent Documents 1 and 2, Non Patent Document 1).

### Prior Art Document

### Patent Document

Patent Document 1
   Japanese Patent Application Laid-Open No. 2001-262252
Patent Document 2
   Japanese Patent Application Laid-Open No. 2008-12495

### Non Patent Document

Non Patent Document 1
James Raphael Warren, "The Effect of Hydrogen on Palladium-Copper Based Membranes for Hydrogen Purification", The University of Birmingham, pgs. 22-29, 37-80.

### SUMMARY OF THE INVENTION

### [Technical Problem]

A phenomenon of hydrogen permeation in a hydrogen permeable membrane composed of a PdCu-based alloy membrane is caused with atoms diffusing, and the hydrogen permeability coefficient in this case has a temperature dependence and is said to follow a so-called Arrhenius equation (Arrhenius plot). The Arrhenius plot indicates that the logarithm of the hydrogen permeability coefficient is negatively proportional to a reciprocal of a temperature (1/T), and thus measuring a hydrogen permeability coefficient in any temperature region allows to predict it in other temperature region.

However, the studies by the present inventors showed that the predictability of the hydrogen permeability coefficients based on the Arrhenius plot as above is not fully established with the hydrogen permeable membrane composed of the PdCu-based alloy. Specifically, even if an Arrhenius plot is produced based on the hydrogen permeability coefficients measured in a high-temperature region, the actual measurement value of the hydrogen permeability coefficient in a low-temperature region deviates from the Arrhenius plot and has a lower value than the predicted. That is, the hydrogen permeable membrane composed of the PdCu-based alloy has hydrogen permeability that deteriorates more than anticipated in a low-temperature region. The fact that the hydrogen permeability coefficient has a temperature dependence is unavoidable, but a larger decrease in the hydrogen permeability coefficient than anticipated is not preferable.

Previous studies on the hydrogen permeable membrane have mainly focused on increasing the hydrogen permeability coefficient, and there were not that many that related to improving the temperature dependence of the hydrogen permeable membrane. This is because the hydrogen permeability coefficient indicates the performance of a hydrogen permeable membrane most clearly. In addition, the fact that the application field of the hydrogen permeable membrane has largely been an apparatus of hydrogen purification systems and the like in which operation is permitted in a high-temperature region is deemed to be the underlying factors.

However, devices that use a hydrogen permeable membrane may need operating in a low-temperature region. For example, hydrogen sensors for fuel cell vehicles and medical use are assumed to be used in a normal temperature region. These areas of use for a hydrogen permeable membrane have only been drawing attention recently, but the hydrogen permeable membrane for these applications is required to have a higher hydrogen permeability in a low-temperature region.

The present invention made in view of the above-mentioned background is drawn to a hydrogen permeable membrane composed of a PdCu-based alloy and provides one with improved hydrogen permeability in a low-temperature region. In the present invention, a low-temperature region is a temperature range of from a normal temperature (25°C) to 150°C.

### [Solution to Problem]

To solve the above problems, the present inventors have studied the cause of a deterioration in the hydrogen permeability in a low-temperature region with a PdCu-based alloy and the solutions. A hydrogen permeability is exhibited with the β-phase of a PdCu-based alloy possessing a B2 structure based on bcc (body-centered cubic lattice). Hydrogen absorbed in a PdCu-alloy membrane in this state is dispersed in the interstitial sites of the body-centered cubic lattice of the PdCu to exhibit hydrogen permeability.

The present inventors have assumed that the deterioration in the hydrogen permeability of a PdCu-based alloy membrane is caused with a void formed due to a lattice defect in the PdCu alloy crystal. The voids in the PdCu alloy (body-centered cubic lattice) may be formed in both Pd and Cu sites. Then, when voids are formed, hydrogen is trapped in those voids and cannot be desorbed unless a certain amount of energy is provided. When a hydrogen permeable membrane is under high temperatures, hydrogen can be desorbed with a thermal energy provided. However, hydrogen desorption is difficult in a low-temperature region where the thermal energy is insufficient, and this is deemed to be causing a larger deterioration in the hydrogen permeability than anticipated.

If deterioration of the hydrogen permeability in a low-temperature region is resulting from the hydrogen trapped in the voids, the solution for that is deemed to include adding other element to the alloy system. When voids are formed due to the lattice defect, the added element substitutes the voids to keep the hydrogen dispersing, and hydrogen permeability should be maintained. Therefore, the present inventors have looked into the added elements that may have such an effect and found that Ag is a particularly preferable added element and arrived at the present invention.

That is, the present invention that solves the above problems is drawn to a hydrogen permeable membrane composed of a PdCu-based alloy, wherein the PdCu-based alloy includes 47.0 at% or more and 49.0 at% or less of Pd, and 0.01 at% or more and 0.75 at% or less of Ag, with the balance being Cu and unavoidable impurities. The structure and the hydrogen permeability of the hydrogen permeable membrane of the present invention are described below along with the manufacturing method and usage form.

### (A) Structure of Hydrogen Permeable Membrane of the Present Invention

### (A-1) Alloy Composition

The hydrogen permeable membrane of the present invention is composed of a PdCu-based alloy (PdCuAg alloy) with Pd, Cu, and Ag as constituent elements, apart from the unavoidable impurities described later. The functions of these constituent elements and the composition range are as described below.

### (A-1-1) Pd and Cu

The hydrogen permeable membrane of the present invention is a PdCu-based alloy containing Ag, and thus Pd and Cu are the essential and main constituent elements in the present invention. In addition, Pd is an essential metal to ensure hydrogen permeability of the hydrogen permeable membrane composed of the PdCu-based alloy. Furthermore, the hydrogen permeability of the PdCu-based alloy is exhibited when the PdCu crystal system is in the β-phase possessing a bcc structure. Cu promotes a phase transformation from an α-phase to a β-phase in the PdCu-based alloy and is an essential added metal for maintaining the phase structure necessary for exhibiting hydrogen permeability. Furthermore, Cu has an effect of suppressing a decrease in the strength of the PdCu-based alloy membrane resulting from hydrogen embrittlement.

In the PdCu-based alloy forming the hydrogen permeable membrane of the present invention, the Pd concentration is 47.0 at% or more and 49.0 at% or less. If the Pd concentration exceeds 49.0 at%, it becomes hard to form a β-phase, and thus it becomes difficult to obtain a sufficient amount of the β-phase even after heat treatment in the manufacturing step. On the contrary, because Pd is an essential element to exhibit hydrogen permeability, a reduction in the Pd concentration leads to a deterioration of the hydrogen permeability of the hydrogen permeable membrane. If the Pd concentration is less than 47.0 at%, it becomes difficult to obtain enough hydrogen permeability even in a high-temperature region. The Pd concentration is preferably 47.25 at% or more and 48.8 at% or less, particularly preferably 47.75 at% or more and 48.5 at% or less. Then, the Cu concentration is the balance of the Pd concentration and the Ag concentration and the concentration of unavoidable impurities described later.

### (A-1-2) Ag

When the lattice defect is formed in the PdCu-based alloy, Ag is an added element to preferentially substitute the voids preventing the hydrogen being trapped and fixated and suppresses the deterioration of the hydrogen permeability in a low-temperature region. Other metal elements apart from Ag may have such effects of filling the voids and suppressing the deterioration of the hydrogen permeability in a low-temperature region. However, the studies by the present inventors showed that Ag has a particularly high effect of improving the hydrogen permeability in a low-temperature region. This is presumed to be due to Ag having a high selectivity for voids. Therefore, the present invention has specified Ag as an added element to the PdCu alloy membrane.

The Ag concentration in the PdCu-based alloy in the hydrogen permeable membrane of the present invention is 0.01 at% or more and 0.75 at% or less. If the Ag concentration is less than 0.01 at%, there is no effect of Ag addition. On the contrary, the Ag addition exceeding 0.75 at% deteriorates the overall hydrogen permeability of the PdCu-based alloy membrane and worsens the hydrogen permeability not only in a low-temperature region but also in a high-temperature region. The Ag concentration is preferably 0.1 at% or more and 0.5 at% or less, particularly preferably 0.15 at% or more and 0.38 at% or less.

### (A-1-3) Unavoidable Impurities

The PdCu-based alloy membrane of the present invention is composed of Pd, Cu, and Ag, and does not contain any other intentionally added elements. However, the inclusion of unavoidable impurities is acceptable. Examples of the unavoidable impurities include Fe and Si. These unavoidable impurities are preferably in an amount of 500 ppm or less in total.

### (A-2) Crystal Structure of PdCu-Based Alloy Membrane

Considering the facts that the hydrogen permeability is exhibited with the PdCu-based alloy in the β-phase state and the hydrogen permeable membrane is expected to have an effect of permeating hydrogen in its cross section, the hydrogen permeable membrane of the present invention preferably has a high proportion of the β-phase in the cross section. Specifically, the hydrogen permeable membrane of the present invention is preferably one in which the area percentage of β-phase in any cross section is 95% or more.

Any cross section means that the above conditions are fulfilled in any of the cross sections randomly selected on the PdCu alloy membrane regardless of direction. A cross section of a region where both sides (those of front and back) of the PdCu alloy membrane can be visually checked is observed as an observation region, and the area percentage should be calculated from the area of the β-phase against the overall area of the observation region. The observation region includes both sides of front and back of the PdCu alloy membrane, and it is preferable to set a range covering a width of 10 times or more length of the membrane thickness. The area percentage of β-phase in any cross section is preferably 98% or more, and the upper limit of the area percentage of β-phase is preferably 100%.

An analysis with an electron backscatter diffraction (EBSD) is an effective method to detect the β-phase in any cross section of the PdCu alloy membrane. The EBSD allows to obtain information of every crystal grain in the cross section of the alloy membrane, and thus, the distribution and the area percentage of β-phase in the cross section of the alloy membrane can be measured and calculated.

The PdCu-based alloy membrane forming the hydrogen permeable membrane of the present invention preferably has a membrane thickness of 1 µm or more and 250 µm or less. If the membrane thickness is less than 1 µm, the mechanical strength is insufficient, and it becomes difficult to handle. Also, if the membrane thickness exceeds 250 µm, the hydrogen permeation amount decreases causing a reduction in the purification efficiency. In addition, the PdCu-based membrane of the present invention does not have any specifically limited shapes.

### (A-3) Hydrogen Permeability of PdCu-Based Alloy Membrane of the Present Invention

The hydrogen permeable membrane composed of the PdCu-based alloy of the present invention has a particularly excellent hydrogen permeability in a low-temperature region of 150°C or less. As described above, in the low-temperature region, the hydrogen permeability coefficient of a PdCu-based alloy membrane deviates from the Arrhenius plot that is based on the high-temperature region, and a lower value than the expected is measured. The present invention has reduced the discrepancy in the hydrogen permeability coefficients in a low-temperature region as described above.

A preferable specific aspect of the hydrogen permeable membrane of the present invention is one in which the ratio of a hydrogen permeability coefficient at 100°C, φ¹⁰⁰, to one at 300°C, φ³⁰⁰, is 0.4 or more. A decrease in the hydrogen permeability coefficient with lowering of temperature is unavoidable, and thus the ratio φ¹⁰⁰/φ³⁰⁰ is less than 1. The hydrogen permeable membrane of the present invention suppresses the decrease in the hydrogen permeability coefficient in a low-temperature region resulting in φ¹⁰⁰/φ³⁰⁰ to be 0.4 or more. In addition, the reason for adopting the hydrogen permeability coefficients at 100 and 300°C for the criteria of evaluating properties of the hydrogen permeable membrane is because the hydrogen permeability coefficient is liable to significantly decrease near 100°C. Also, the hydrogen permeability coefficient of the PdCu-based alloy membrane reaches the maximum at 300°C or more and 400°C or less, and so adopting the measurement value at 300°C is convenient. The hydrogen permeability coefficient, φ (mol/m·s·Pa^{1/2}), is calculated with the following formula. [Expression 1] $J = \frac{ϕ}{l} \left(\sqrt{{P}_{f}}-\sqrt{{P}_{P}}\right)$

| | Permeation | | Permeation | | |
|---|---|---|---|---|---|
| J : | flow rate , | ϕ : | coefficient | | |
| l : | Membrane thickness , | P_{f}: | Pressure at supply side, | Pₚ: | Pressure at permeate side |

There is no specifically limited measurement range for measuring the ratio of the hydrogen permeability coefficients, φ¹⁰⁰/φ³⁰⁰, as long as the measurement range includes 100 and 300°C. The measurement range is preferably 25°C or more and 400°C or less. Measuring at less than 25°C has not much meaning. In addition, the hydrogen permeability coefficient is likely to reach the maximum at temperatures exceeding 400°C, and a decrease in the hydrogen permeability coefficient may also be observed at temperatures higher than this due to a decomposition of the β-phase. However, measurement of the hydrogen permeability coefficient can be taken over a wider range than 100°C or more and 400°C or less without any limitations.

The hydrogen permeability of the PdCu-based alloy membrane has the Pd and Cu concentrations, the area percentage of β-phase described above, and the like working in combination. Also, even if the hydrogen permeable membrane has an optimized alloy composition and thus a high hydrogen permeability coefficient in a high-temperature region, the deterioration of the hydrogen permeability in a low-temperature region may not be avoided. The Ag addition to the PdCu alloy of the present invention strives to refine the alloy composition and the area percentage of β-phase and the like to cooperatively optimize the hydrogen permeability in temperature ranges including a low-temperature region.

### (B) Method for Manufacturing Hydrogen Permeable Membrane of the Present Invention

Next, a suitable method for manufacturing the hydrogen permeable membrane of the present invention is explained. The PdCu-based alloy of the composition described above is prepared, which is then made into a thin membrane via a plastic processing, such as rolling, to manufacture the hydrogen permeable membrane of the present invention. In addition, a preferred aspect includes a heat treatment to refine the area percentage of β-phase in the cross section of the thin membrane. A suitable method for manufacturing the hydrogen permeable membrane of the present invention is explained below.

### (B-1) Steps of Manufacturing PdCu-Based Alloy Membrane

A method for manufacturing the PdCu alloy membrane can be selected appropriately according to the membrane thickness, size, and the like, and is not particularly limited. Various types of thin film deposition processes, such as a sputtering method, a vacuum evaporation method, a chemical deposition method, or a plating method may be used for the PdCu-based alloy membrane. In addition, a plate-shaped or foil-shaped PdCu-based alloy membrane can be manufactured with a rolling processing of the alloy chunk (ingot) and the like.

The manufacturing of the PdCu-based alloy membrane with a rolling method includes manufacturing of a PdCu-based alloy ingot of the above composition with the melt casting method and processing the ingot with an appropriate combination of a hot forging, a hot rolling, a cold rolling, and the like to obtain an alloy membrane having a predetermined thickness. There is no specifically limited processing step from an ingot to an alloy membrane. However, for the PdCu-based alloy, the phase transformation to the β-phase is promoted with the processing strain introduced, and therefore it is preferable to process with the reduction ratio of 65% or more and 85% or less in cold as the final processing step.

### (B-2) Heat Treatment Step of PdCu-Based Alloy Membrane (Promotion of Phase Transformation to β-Phase)

The PdCu-based alloy membrane of the above composition manufactured with various manufacturing methods is heat-treated in the predetermined temperature range to exhibit a phase transformation to the β-phase. The heat treatment temperature is 275°C or more and 400°C or less. The phase transformation temperature (from the α-phase to the β-phase) of the PdCu-based alloy membrane of the present invention differs depending on the composition even within the composition range above, but it is estimated to be within the range of approximately from 300 to 400°C. Moreover, no phase transformation may occur with a heat treatment at less than 275°C, or it becomes difficult to have an area percentage of β-phase in the membrane cross section of 95% or more. On the contrary, the β-phase of the PdCu-based alloy is known to decompose to the α-phase under high temperatures, and so the β-phase is liable to decompose when the temperature exceeds 400°C. Therefore, the temperature range for the heat treatment is preferably 275°C or more and 400°C or less.

The atmosphere of the heat treatment for the phase transformation to the β-phase is preferably one with pressurized hydrogen. More preferably, the atmosphere is with 0.05 MPaG or more and 1.0 MPaG or less of a hydrogen partial pressure.

The heat treatment time is adjusted with the membrane thickness of the PdCu-based alloy membrane. The formation of the β-phase with heat treatment progresses from both surfaces of the PdCu-based alloy membrane, and a phase transformation inside the membrane progresses with the treatment time. The present invention requires an increase in the area percentage of β-phase in the cross section of the PdCu-based alloy membrane, and thus, enough heat treatment time is to be secured so that the phase transformation occurs to the inside while considering the membrane thickness. It is preferable that the PdCu-based alloy membrane having the membrane thickness of the suitable range described above has 5 hours or more of the treatment time. If the heat treatment is conducted within the above temperature range, the β-phase hardly decomposes, and so there is no issue with taking a long treatment time.

### (C) Usage Form of Hydrogen Permeable Membrane of the Present Invention

The hydrogen permeable membrane of the present invention has suitable hydrogen permeability from a high-temperature region to a low-temperature region. Thus, the present invention can be used in various forms, such as a hydrogen sensor, in addition to the hydrogen purification systems (hydrogen purification process).

### (C-1) Hydrogen Purification Process and Hydrogen Purification Systems

The hydrogen permeable membrane of the present invention allows hydrogen to selectively permeate from a hydrogen-containing gas (feed) and purifies it.

In the hydrogen purification process, it is preferable to appropriately set the processing temperature (usage temperature) of the hydrogen permeable membrane. A suitable processing temperature of the hydrogen purification method with the PdCu-based alloy membrane of the present invention is 25°C or more and 400°C or less. Regarding the range of this processing temperature, the PdCu-based alloy membrane of the present invention can exhibit a suitable hydrogen permeability that allows to differentiate itself from those of conventional art, particularly in a low-temperature region. However, at temperatures exceeding 400°C, the β-phase may decompose even with the PdCu-based alloy membrane of the present invention, and the hydrogen permeability coefficient may decrease. Therefore, the upper limit for the suitable processing temperature is 400°C.

Here, the processing temperature is a temperature of a region where a hydrogen-containing gas to be purified is in contact with the hydrogen permeable membrane and permeates. It is adjusted with the temperatures of at least one of the hydrogen-containing gas, the hydrogen permeable membrane, and the atmosphere inside the hydrogen manufacturing (purification) system set to the above temperature range.

In purifying a hydrogen-containing gas, a processing target gas is supplied to one surface (primary side) of the hydrogen permeable membrane. In supplying the processing target gas, the pressure of the primary side is set higher than that of the other surface (secondary side) of the hydrogen permeable membrane to extract the purified hydrogen that has permeated through the hydrogen permeable membrane. There is no limitation on pressure difference at this time.

The hydrogen purification step with the PdCu-based alloy membrane of the present invention may use a PdCu-based alloy membrane that has been heat-treated for the β-phase formation described above, but the heat treatment may be conducted just before the hydrogen purification step. That is, an untreated PdCu-based alloy membrane is prepared and heat-treated at a temperature of 275°C or more and 400°C or less in hydrogen atmosphere to form a hydrogen permeable membrane. Then, the processing target gas may be permeated through the hydrogen permeable membrane at a processing temperature of 25°C or more and 400°C or less.

The above hydrogen purification method is conducted with a hydrogen purification system adopting the hydrogen permeable membrane of the present invention. Main structure of the hydrogen purification system apart from the hydrogen permeable membrane may be the same as that of the known hydrogen purification systems. When installing the hydrogen permeable membrane into a hydrogen permeable device, the hydrogen permeable membrane may be combined with a gas permeable support to supplement the mechanical strength. A metal mesh, a porous sintered material, or the like can be used as the support. However, the support is not essential as the mechanical strength may be ensured with the membrane thickness of the hydrogen permeable membrane and the like.

### (C-2) Hydrogen Sensor

As mentioned at the beginning, a high-sensitive hydrogen sensor is in demand as initiatives for new areas of use of hydrogen such as fuel cells and medical technologies. The hydrogen permeable membrane of the present invention can also be suitably used in a hydrogen sensor.

Examples of the hydrogen sensor adopting the hydrogen permeable membrane include a gas sensor with a rare earth metal of Y, La, or the like and a semiconductor metal oxide of Ga₂O₃, SrTiO₃, or the like, as a hydrogen detection element. The hydrogen permeable membrane in the hydrogen sensor is used as a protective membrane for selectively permeating hydrogen and supplying it to the hydrogen detection element. In addition, recently, development of a concentration cell type hydrogen sensor has been reported. The concentration cell type hydrogen sensor uses the hydrogen permeable membrane as a standard electrode and a sample electrode. The hydrogen permeable membrane provides a selective hydrogen permeability to both electrodes and supplies the permeated hydrogen to an electrolyte. The hydrogen permeable membrane of the present invention exhibits an excellent hydrogen selectivity in wide range of temperature regions and forms a sensing unit of various types of hydrogen sensors.

### [Advantageous Effect of Invention]

The hydrogen permeability coefficient of a hydrogen permeable membrane is expected to be liable to have a temperature dependence consistent with the Arrhenius plot, and the present invention has hydrogen permeability in line with this trend even in a low-temperature region. In addition, the hydrogen permeable membrane composed of the PdCu-based alloy of the present invention exhibits better hydrogen permeability than those of conventional art, even in a low-temperature region of 150°C or less.

### BRIEF DESCRIPTION OF THE DRAWINGS

Fig. 1 is a diagram showing the structure of the hydrogen permeability coefficient measurement device used in the present embodiment;
Fig. 2 shows the Arrhenius plots indicating the temperature dependence of the hydrogen permeability coefficients of the PdCu-based alloy membranes of the group A (basic composition: 48.3 at% Pd-51.7 at% Cu) manufactured in the present embodiment;
Fig. 3 shows the Arrhenius plots indicating the temperature dependence of the hydrogen permeability coefficients of the PdCu-based alloy membranes of the group B (basic composition: 47.25 at% Pd-52.75 at% Cu) manufactured in the present embodiment;
Fig. 4 shows the Arrhenius plots indicating the temperature dependence of the hydrogen permeability coefficients of the PdCu-based alloy membranes of the group C (basic composition: 48.5 at% Pd-51.5 at% Cu) manufactured in the present embodiment;
Fig. 5 shows the Arrhenius plots indicating the temperature dependence of the hydrogen permeability coefficients of the PdCu-based alloy membranes (PdCuAl alloy membranes) manufactured as reference examples; and

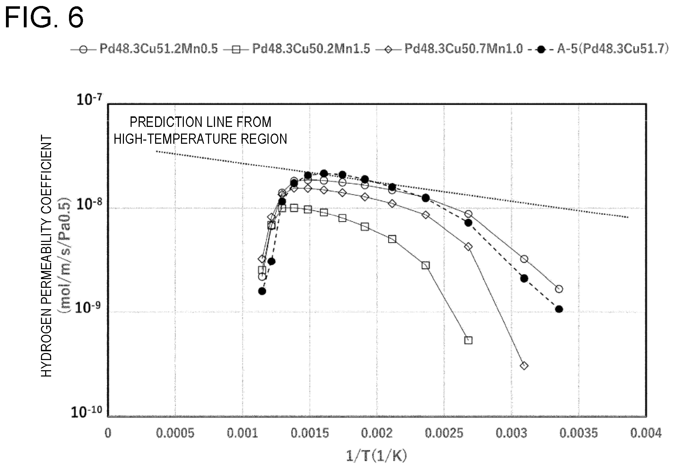

Fig. 6 shows the Arrhenius plots indicating the temperature dependence of the hydrogen permeability coefficients of the PdCu-based alloy membranes (PdCuMn alloy membranes) manufactured as reference examples.

### DETAILED DESCRIPTION OF THE PREFERRED EMBODIMENTS

The embodiments of the present invention are explained below. In the present embodiment, a hydrogen permeable membrane composed of a PdCu alloy and one composed of a PdCuAg alloy in which Ag was added to the PdCu alloy were manufactured. Then, hydrogen permeability coefficients from a high-temperature region to a low-temperature region were measured for each hydrogen permeable membrane. In the present embodiment, there were three groups, A to C, of the PdCu alloy having the basic alloy composition as below, and from 0.15 to 1.0 at% of Ag were added to these PdCu alloys to manufacture the PdCuAg alloy membranes.
Group A: 48.3 at% Pd-51.7 at% Cu
Group B: 47.25 at% Pd-52.75 at% Cu
Group C: 48.5 at% Pd-51.5 at% Cu

The compositions of the PdCuAg alloys of the above three groups were adjusted with the Cu concentration modified and Ag added without changing the Pd concentration. This is to substitute Cu with the Ag added. The compositions were set in such a way with considerations for the hydrogen permeability of the PdCu-based alloy membrane largely dependent on Pd as well as Ag exhibiting the effect when substituted to the voids of a PdCu-based alloy as described above. The PdCu-based alloy membrane was manufactured as below.

### [Manufacturing of PdCu-Based Alloy Membrane]

A PdCu-based alloy ingot of the target composition was manufactured with a melt casting method, and the surface of the ingot was machined and cleaned. Then, the cold rolling processing step was repeated on the PdCu-based alloy ingot to manufacture a thin membrane. The rolling processing step included an intermediate annealing of from 600 to 900°C conducted several times, and the reduction ratio in the final rolling was 70%. In the present embodiment, a PdCu-based alloy membrane having a thickness of from 30 to 100 µm was manufactured. Then, the PdCu-based alloy membrane was heat-treated to induce a phase transformation to the β-phase. Heat treatment was conducted in hydrogen of 0.30 MPaG under the conditions of 300°C or 400°C of the heat treatment temperature and 24 hours of the treatment time. The compositions, membrane thicknesses, and the heat treatment temperatures of the PdCu-based alloy membranes manufactured in the present embodiment are summarized in Table 1.

**[Table 1]**

| No. | Alloy composition (at%) | | | Heat treatment temperature (°C) | Membrane thickness (µm) | |
|---|---|---|---|---|---|---|
| | Pd | Cu | Ag | | | |
| A-1 | 48.3 | 51.55 | 0.15 | 300 | 30 | Example |
| A-2 | | 51.45 | 0.25 | | | |
| A-3 | | 51.2 | 0.5 | | 100 | |
| A-4 | | 50.7 | 1.0 | | | Comparative Example |
| A-5 | | 51.7 | - | | | |
| B-1 | 47.25 | 52.25 | 0.5 | 400 | 100 | Example |
| B-2 | | 51.75 | 1.0 | | | Comparative Example |
| B-3 | | 52.75 | - | | | |
| C-1 | 48.5 | 51.0 | 0.5 | 300 | 100 | Example |
| C-2 | | 51.5 | - | | | Comparative Example |

### [Cross-section Analysis of PdCu-Based Alloy Membrane]

The cross section of each PdCu-based alloy membrane manufactured was analyzed with an EBSD to measure the area percentage of β-phase in the cross section in the observation region. The pretreatment for the EBSD analysis included a final polishing of the sample cross section with 0.25 µm diamond paste and then milling of the surface with an ion milling system (IM4000 manufactured by Hitachi High-Tech Corporation). The conditions of the ion milling were F2 stage control, acceleration of 0.1 kV, discharge of 1.5 kV, an ion beam irradiation angle of 70°, 4 mm offset, and an argon gas flow rate of 0.07 cm³/min to mill the surface for 20 minutes.

An ultra-high resolution analytical scanning electron microscope (SU-70 manufactured by Hitachi High-Tech Corporation; NordlysMax 3 manufactured by Oxford Instruments plc) was used for the EBSD analysis. The analysis conditions were a pitch of 0.2 µmm, 4 x 4 pinning mode, 0 gain, automatic exposure time, an EBSD solver setting, 12 bands, and a Hough resolution of 60. In addition, the analysis was conducted with 44 reflectors for the FCC-phase (lattice constant of 3.7653 Å) and 43 reflectors for the B2-phase. Then, the area percentage of β-phase (lattice constant of 2.9662 Å) was measured with an image analysis software installed in the analyzer.

The EBSD analysis results confirmed that, in all PdCu-based alloy membranes manufactured in the present embodiment (A-1 to A-5, B-1 to B-3, C-1 and C-2), the area percentage of β-phase in the cross section was 95% or more. Particularly, in the PdCu-based alloy membranes of B-1 to B-3, the area percentage of β-phase was 100%. Also, the area percentages of β-phase of the PdCu-based alloy membranes of A-1 to A-5 were within the range of 99.9 to 100%, and those of the PdCu-based alloy membranes of C-1 and C-2 were 99.0% or more.

### [Measurement of Hydrogen Permeability Coefficient of PdCu-Based Alloy Membrane]

Next, the hydrogen permeability coefficients of the hydrogen permeable membranes heat-treated at each temperature and manufactured (PdCu-based alloy membranes) were measured. The hydrogen permeable membrane manufactured was cut into a circle with a diameter of 21.3 mm. This hydrogen permeable membrane and a stainless-steel wire mesh (diameter 18.4 mm) were held together using an ICF34 gasket to prepare a sample (effective area 2.08 cm²). The sample was set in a sample holder. The sample holder is a vacuum container that has spaces on a primary side (gas supply side) and a secondary side (permeated gas side) for the sample (hydrogen permeable membrane) and that is equipped with nozzles for supplying and discharging the gas.

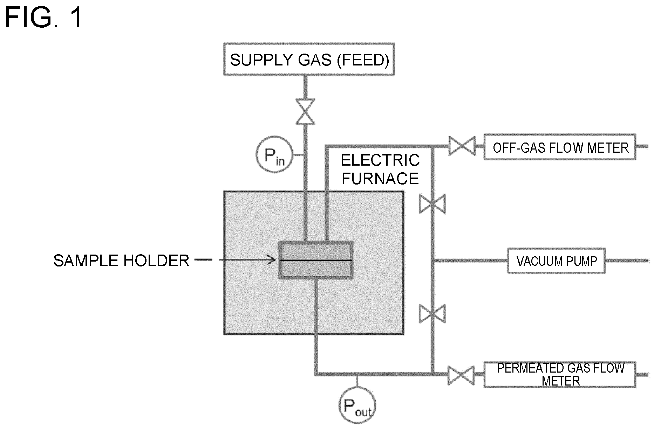

Fig. 1 is a schematic diagram of the hydrogen permeability coefficient measurement device. The sample holder formed as described above was set in an electric furnace and connected to the piping of a vacuum pump and various types of gas flow meters. The primary and secondary sides of the sample holder were vacuumed and then substituted with hydrogen before measurement. Next, the furnace temperature was increased to a predetermined temperature, and then hydrogen at a predetermined pressure was introduced to the primary side of the hydrogen permeable membrane. Then, the flow rate of the hydrogen permeated to the secondary side was measured. The permeability coefficient was calculated from the flow rate of the permeated gas (hydrogen) measured, the pressure on the supply side, the pressure on the permeate side, and the membrane thickness of the hydrogen permeable membrane. The measurement conditions in the present embodiment were as below.
- Measurement temperature: From 20 (293K) to 600°C (873K)
- Supply gas: Hydrogen (hydrogen concentration 99.99%)
- Pressure on the primary side: 0.3 MPa·G
- Pressure on the secondary side: 0 MPa·G
- Test period: 2.5 hours

### [Evaluation Results]

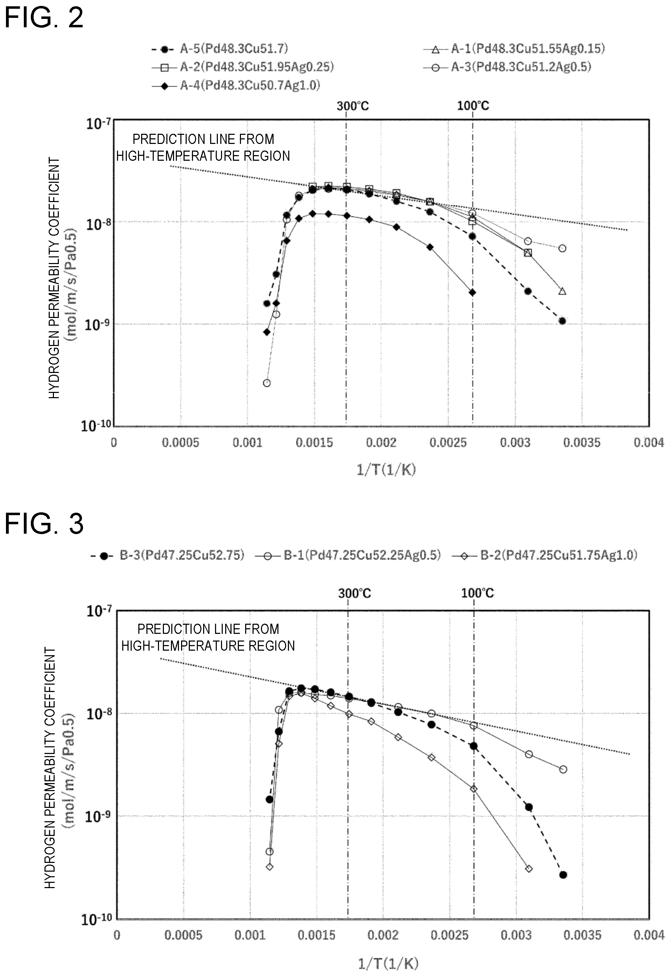

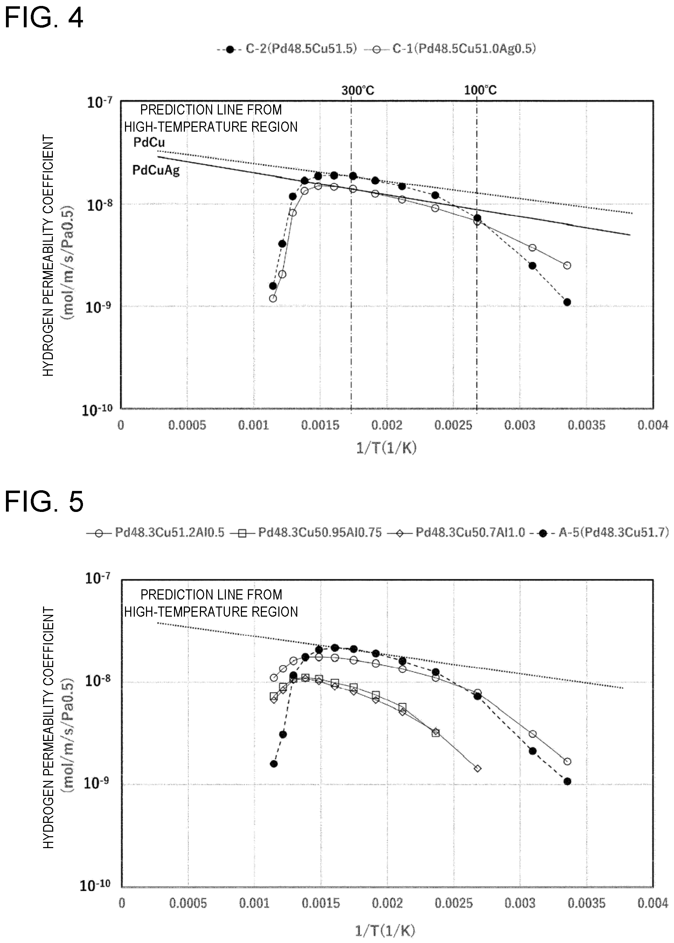

Figs. 2 to 4 show the graphs of the Arrhenius plots indicating the temperature dependence of the hydrogen permeability coefficients of the PdCu-based alloy membranes of the groups A to C (PdCu and PdCuAg alloy membranes) manufactured in the present embodiment. These figures show a prediction line of the hydrogen permeability coefficients estimated based on a linear regression from the measurement values in a high-temperature region of from 250 to 400°C for the PdCu alloy membrane with no Ag addition. However, regarding Fig. 4 (group C), there was a difference in the measurement values with and without the Ag addition, and thus the prediction line of hydrogen permeability coefficients for the PdCuAg alloy membrane is also shown. Figs. 2 to 4 show that the measurement values of the hydrogen permeability coefficients of the conventional PdCu alloy membrane having no Ag addition deviated from the prediction line at around 150°C (1/T of 0.0024), and the degree of discrepancy became larger in a low-temperature region. On the contrary, the Ag-added PdCuAg alloy membranes showed some discrepancies from the prediction line, but the degree of discrepancy has reduced indicating that the decrease in the hydrogen permeability coefficients in a low-temperature region was suppressed. Therefore, the Ag addition on the PdCu alloy membrane was confirmed to contribute to improving the hydrogen permeability coefficients in a low-temperature region.

However, the advantage of the Ag addition on the PdCuAg alloy membrane is limited to when the addition amount is small. The effect of improving the degree of a decrease in the hydrogen permeability coefficients in a low-temperature region for the PdCuAg alloy membrane with 1.0 at% of the Ag concentration in Figs. 2 and 3 was not significant. Moreover, these PdCuAg alloy membranes had low hydrogen permeability coefficients in the entire temperature range. It is deemed that adding a large amount of Ag does not contribute at all to improving the properties of the PdCu alloy membrane.

In the present embodiment, PdCuAg alloy membranes with Ag addition amounts of 1.5, 3, and 6 at% were manufactured in addition to the above samples, and their hydrogen permeability coefficients were measured. However, these had extremely low hydrogen permeability coefficients in the entire temperature range and were hard to function as a hydrogen permeable membrane.

Regarding the hydrogen permeability of the PdCu and the PdCuAg alloy membranes in the present embodiment, the hydrogen permeability coefficients at 100 and 300°C, φ¹⁰⁰ and φ³⁰⁰, and their ratios (φ¹⁰⁰/φ³⁰⁰) are summarized in Table 2 below.

**[Table 2]**

| No. | Alloy composition (at%) | | | Hydrogen permeability coefficient (×10⁻⁸mol/m·s·Pa^{0.5}) | | φ¹⁰⁰/φ³⁰⁰ | |
|---|---|---|---|---|---|---|---|
| | Pd | Cu | Aq | φ³⁰⁰ | φ¹⁰⁰ | | |
| A-1 | 48.3 | 51.55 | 0.15 | 2.13 | 1.12 | 0.53 | Example |
| A-2 | | 51.45 | 0.25 | 2.21 | 1.02 | 0.46 | |
| A-3 | | 51.2 | 0.5 | 2.12 | 1.22 | 0.58 | |
| A-4 | | 50.7 | 1.0 | 1.20 | 0.206 | 0.17 | Comparative Example |
| A-5 | | 51.7 | - | 2.1 | 0.724 | 0.34 | |
| B-1 | 47.25 | 52.25 | 0.5 | 1.60 | 0.763 | 0.48 | Example |
| B-2 | | 51.75 | 1.0 | 1.58 | 0.185 | 0.12 | Comparative Example |
| B-3 | | 52.75 | - | 1.46 | 0.481 | 0.33 | |
| C-1 | 48.5 | 51.0 | 0.5 | 1.40 | 0.673 | 0.48 | Example |
| C-2 | | 51.5 | - | 1.87 | 0.726 | 0.39 | Comparative Example |

Table 2 shows that the ratio of the hydrogen permeability coefficients, φ¹⁰⁰/φ³⁰⁰, of the PdCuAg alloy membrane with Ag appropriately added was 0.4 or more, and the hydrogen permeability coefficients in a low-temperature region were effectively maintained.

### Reference Example (Comparison with Addition of Other Metals)

To check whether Ag is suitable as a metal element to be added to the PdCu alloy membrane, the present inventors manufactured the PdCu-based alloy membranes added with other metals and evaluated these in the same way as above. The steps for manufacturing the PdCu-based alloy membrane are the same as above. The basic composition was also the PdCu alloys of the groups A to C above for these reference examples, and the PdCu-based alloy membranes added with the added metals of Al and Mn (PdCuAl and PdCuMn alloy membranes) were manufactured and evaluated. It should be noted that the reason for considering Al and Mn as the reference examples is that these elements are assumed to have a similar effect of stabilizing the phase transformation from the fcc-structure (α-phase) to the bcc-structure (β-phase) as Ag.

Regarding the Arrhenius plots as the evaluation results of the PdCuAl and PdCuMn alloy membranes of the reference examples, the results relating to the PdCu-based alloy membrane of the group A basic composition are shown in Figs. 5 (PdCuAl alloy membrane) and 6 (PdCuMn alloy membrane) as representative examples. When Al and Mn were adopted as the added elements to the PdCu alloy membrane and their added concentrations were around 0.5 at%, the hydrogen permeability coefficients improved slightly in a low-temperature region. However, the degree of improvement was extremely narrow, and Al and Mn did not have the same improvement effect as Ag. The ratio of the hydrogen permeability coefficients, φ¹⁰⁰/φ³⁰⁰, was also less than 0.4. This trend was the same with the PdCu-based alloy membranes having other basic compositions (groups B and C). Ag was confirmed to be the most suitable added metal for the voids that are the cause of the decrease in the hydrogen permeability coefficients of a PdCu-based alloy.

### [Industrial Applicability]

As a result of adding Ag, a decrease in the hydrogen permeability coefficient in a low-temperature region that is observed with the hydrogen permeable membrane composed of the conventional PdCu alloy was suppressed with the hydrogen permeable membrane composed of the PdCu-based alloy of the present invention. This indicates that the present invention is significant in operation of various types of apparatuses and devices adopting the hydrogen permeable membranes. It is anticipated that the hydrogen permeable membrane of the present invention can be applied to a hydrogen sensor that is desired to be operated in a low-temperature region, in addition to hydrogen purification systems.

## Claims

1. A hydrogen permeable membrane comprising a PdCu-based alloy,
wherein the PdCu-based alloy comprises 47.0 at% or more and 49.0 at% or less of Pd, and 0.01 at% or more and 0.75 at% or less of Ag, with the balance being Cu and unavoidable impurities.

2. The hydrogen permeable membrane according to claim 1, wherein an area percentage of β-phase in any cross section is 95% or more.

3. The hydrogen permeable membrane according to claim 1 or 2, wherein a ratio of a hydrogen permeability coefficient at 100°C, φ¹⁰⁰, to one at 300°C, φ³⁰⁰, (φ¹⁰⁰/φ³⁰⁰), is 0.4 or more.

4. The hydrogen permeable membrane according to claim 1 or 2, comprising a thickness of 1 µm or more and 250 µm or less.
